# EUROPÄISCHE PATENTANMELDUNG

(11) **EP 3 346 313 A1**
(43) Veröffentlichungstag der Anmeldung: **11.07.2018**
(21) Anmeldenummer: 17209297.5
(22) Anmeldetag: 21.12.2017
(51) Int. Cl.: G02B 27/01, B60K 35/00

(54) **VERFAHREN UND VORRICHTUNG ZUR LICHTSTEUERUNG**

(30) Priorität: 23.12.2016 CN 201611204024
(71) Anmelder: Volkswagen China Investment Co., Ltd., Chaoyang District, Beijing 100027 (CN)
(72) Erfinder: Wang, Muchen, Beijing, 100027 (CN)
(74) Vertreter: Rittner, Karsten

(57) **Zusammenfassung**

Die vorliegende Erfindung betrifft ein Verfahren und ein Gerät zum Einstellen der Beleuchtung, wobei das Verfahren die folgenden Schritte umfasst: Prognostizieren, ob die Beleuchtungsumgebung einer zu befahrenden Straße in der Fahrrichtung eines Fahrzeug sich ändern wird; und rechtzeitiges Einstellen der Beleuchtung im Fahrzeug bei einem positiven Prognoseergebnis mittels einer Beleuchtungseinstellvorrichtung des Fahrzeugs, um eine durch ein AR-fähiges Gerät im Fahrzeug angeforderte Hintergrundbeleuchtung zu erzielen. Mit dem Verfahren und Gerät wird es ermöglicht, dass das AR-fähige Gerät einen besseren Anzeigeeffekt im Fahrzeug bieten kann.

## Beschreibung

### Technisches Gebiet

Die vorliegende Erfindung betrifft ein Verfahren und ein Gerät zum Einstellen der Beleuchtung.

### Stand der Technik

Ein Augment-Reality-fähiges (Augment Reality: AR) Gerät ist ein Gerät, mit dem virtuelle elektronische Informationen über die reale Welt überlagert sind, um die Informationen der realen Welt zu erweitern oder zu verbreiten. Beispiele des AR-fähigen Geräts sind Google Glass von Google, Oculus von Facebook, AR-fähige Brillen von Epson, Hololense von Microsoft usw. Mit AR-fähigen Geräten kann man sensationelle Erfahrungen jenseits der Realität genießen.

### Inhalt der Erfindung

Die Ausführungsformen der vorliegenden Erfindung stellen ein Verfahren und ein Gerät zum Einstellen der Beleuchtung zur Verfügung, so dass ein AR-fähiges Gerät einen besseren Anzeigeeffekt im Fahrzeug bieten kann.

Ein Verfahren zum Einstellen der Beleuchtung in einer Ausführungsform der vorliegenden Erfindung umfasst die folgenden Schritte: Prognostizieren, ob sich die Beleuchtungsumgebung einer zu befahrenden Straße in der Fahrrichtung eines Fahrzeug ändern wird; und rechtzeitiges Einstellen der Beleuchtung im Fahrzeug bei einem positiven Prognoseergebnis mittels einer Beleuchtungseinstellvorrichtung des Fahrzeugs, um eine durch ein AR-fähiges Gerät im Fahrzeug angeforderte Hintergrundbeleuchtung zu erzielen.

Dabei umfasst eine Einstellung der Beleuchtung im Fahrzeug die folgenden Schritte: Feststellen einer Steuerstrategie für die Beleuchtungseinstellvorrichtung des Fahrzeugs anhand einer Ziellichteinfallintensität des AR-fähigen Geräts und einer erwarteten Lichtintensität der Beleuchtungsumgebung der zu befahrenden Straße; und Steuern der Beleuchtungseinstellvorrichtung nach der festgestellten Steuerstrategie zum Einstellen der Beleuchtung im Fahrzeug, während oder bevor das Fahrzeug in die zu befahrenden Straße einfährt; wobei die Ziellichteinfallintensität aufgrund der Beleuchtungsparameter einer laufenden Anwendung auf dem AR-fähigen Gerät errechnet wird.

Dabei umfasst das Verfahren weiterhin die folgenden Schritte: Einstellen der Steuerstrategie aufgrund eines Differenzwerts zwischen der tatsächlichen Lichteinfallintensität des AR-fähigen Geräts nach dem Einstellen und der Ziellichteinfallintensität, wenn der Differenzwert größer als ein vorgegebener Schwellenwert ist; und Steuern der Beleuchtungseinstellvorrichtung nach der eingestellten Steuerstrategie zum Einstellen der Beleuchtung im Fahrzeug.

Dabei umfasst das Verfahren weiterhin den folgenden Schritt: Übertragen der tatsächlichen Lichteinfallintensität des AR-fähigen Geräts als eine optimale Lichteinfallintensität für das AR-fähige Gerät an das AR-fähige Gerät, wenn nach dem Einstellen die tatsächliche Lichteinfallintensität des AR-fähigen Geräts die Ziellichteinfallintensität nicht erreichen kann, so dass das AR-fähige Gerät aufgrund der optimalen Lichteinfallintensität und der Ziellichteinfallintensität den Polarisationswinkel einer Linse des AR-fähigen Geräts und/oder die Leuchtdichte des Projektionsabbildes des AR-fähigen Geräts einstellt.

Bei der tatsächlichen Lichteinfallintensität des AR-fähigen Geräts handelt es sich um eine Lichtintensität im Fahrzeug, eine durch einen Beleuchtungssensor des AR-fähigen Geräts erfasste Lichtintensität, oder eine Lichtintensität, die auf der Lichtintensität im Fahrzeug und der durch den Beleuchtungssensor des AR-fähigen Geräts erfassten Lichtintensität basierend festgestellt ist.

Dabei umfasst der Schritt des Prognostizierens, ob sich die Beleuchtungsumgebung einer zu befahrenden Straße in der Fahrrichtung eines Fahrzeug ändern wird, den folgenden Schritt: Prognostizieren, dass die Beleuchtungsumgebung der zu befahrenden Straße dunkel wird, wenn anhand der Navigationsdaten der Fahrtroute festgestellt wird, dass das Fahrzeug in einen Tunnel eintreten wird oder wenn anhand der Online-Wetterinformationen festgestellt wird, dass das Fahrzeug in eine Gewitterzone eintreten wird.

Ein Gerät zum Einstellen der Beleuchtung in einer Ausführungsform der vorliegenden Erfindung umfasst: ein Prognostiziermodul zum Prognostizieren, ob sich die Beleuchtungsumgebung einer zu befahrenden Straße in der Fahrrichtung eines Fahrzeug ändern wird; und ein Einstellmodul zum rechtzeitigen Einstellen der Beleuchtung im Fahrzeug bei einem positiven Prognoseergebnis mittels einer Beleuchtungseinstellvorrichtung des Fahrzeugs, um eine durch ein AR-fähiges Gerät im Fahrzeug angeforderte Hintergrundbeleuchtung zu erzielen.

Dabei umfasst das Einstellmodul: ein Feststellmodul zum Feststellen einer Steuerstrategie für die Beleuchtungseinstellvorrichtung des Fahrzeugs anhand einer Ziellichteinfallintensität des AR-fähigen Geräts und einer erwarteten Lichtintensität der Beleuchtungsumgebung der zu befahrenden Straße; und ein Steuermodul zum Steuern der Beleuchtungseinstellvorrichtung nach der festgestellten Steuerstrategie, um während oder bevor das Fahrzeug in die zu befahrende Straße einfährt, die Beleuchtung im Fahrzeug einzustellen; wobei die Ziellichteinfallintensität aufgrund der Beleuchtungsparameter einer laufenden Anwendung auf dem AR-fähigen Gerät errechnet wird.

Dabei umfasst das Gerät weiterhin: ein Einstellmodul zum Einstellen der Steuerstrategie aufgrund eines Differenzwerts zwischen der tatsächlichen Lichteinfallintensität des AR-fähigen Geräts nach dem Einstellen und der Ziellichteinfallintensität, wenn der Differenzwert größer als ein vorgegebener Schwellenwert ist; wobei das Steuermodul weiterhin dazu verwendet wird, die Beleuchtungseinstellvorrichtung nach der eingestellten Steuerstrategie zu steuern, um die Beleuchtung im Fahrzeug einzustellen.

Dabei umfasst das Gerät weiterhin: ein Übertragungsmodul zum Übertragen der tatsächlichen Lichteinfallintensität des AR-fähigen Geräts als eine optimale Lichteinfallintensität des AR-fähigen Geräts an das AR-fähige Gerät, wenn nach dem Einstellen die tatsächliche Lichteinfallintensität des AR-fähigen Geräts die Ziellichteinfallintensität nicht erreichen kann, so dass das AR-fähige Gerät aufgrund der optimalen Lichteinfallintensität und der Ziellichteinfallintensität den Polarisationswinkel einer Linse des AR-fähigen Geräts und/oder die Leuchtdichte des Projektionsabbildes des AR-fähigen Geräts einstellt.

Bei der tatsächlichen Lichteinfallintensität des AR-fähigen Geräts handelt es sich um eine Lichtintensität im Fahrzeug, eine durch einen Beleuchtungssensor des AR-fähigen Geräts erfasste Lichtintensität, oder eine Lichtintensität, die auf der Lichtintensität im Fahrzeug und der durch den Beleuchtungssensor des AR-fähigen Geräts erfassten Lichtintensität basierend festgestellt ist.

Dabei wird das Prognostiziermodul weiterhin zum Prognostizieren verwendet, dass die Beleuchtungsumgebung der zu befahrenden Straße dunkel wird, wenn anhand der Navigationsdaten der Fahrtroute festgestellt wird, dass das Fahrzeug in einen Tunnel eintreten wird oder wenn anhand der Online-Wetterinformationen festgestellt wird, dass das Fahrzeug in eine Gewitterzone eintreten wird.

Eine Vorrichtung zum Einstellen der Beleuchtung in einer Ausführungsform der vorliegenden Erfindung umfasst: einen Prozessor; und einen Speicher zum Speichern ausführbarer Anweisungen, wobei beim Ausführen der ausführbaren Anweisungen ermöglicht wird, dass der Prozessor ein obiges Verfahren ausführt.

Ein maschinenlesbares Medium wird in einer Ausführungsform der vorliegenden Erfindung vorgeschlagen, auf dem ausführbare Anweisungen gespeichert sind, wobei beim Ausführen der ausführbaren Anweisungen ermöglicht wird, dass die Maschine das obiges Verfahren ausführt.

Ein System zum Einstellen der Beleuchtung in einer Ausführungsform der vorliegenden Erfindung umfassend: eine Beleuchtungseinstellvorrichtung für ein Fahrzeug; und eine Steuervorrichtung zum Ausführen des obigen Verfahrens.

Dabei umfasst das System weiterhin ein AR-fähiges Gerät.

Dabei wird das AR-fähige Gerät weiterhin dazu verwendet, aufgrund der optimalen Lichteinfallintensität und der Ziellichteinfallintensität den Polarisationswinkel einer Linse des AR-fähigen Geräts und/oder die Leuchtdichte des Projektionsabbildes des AR-fähigen Geräts einzustellen, wenn von der Steuervorrichtung die optimale Lichteinfallintensität des AR-fähigen Geräts empfangen wird.

Bei der tatsächlichen Lichteinfallintensität des AR-fähigen Geräts handelt es sich um eine durch einen Beleuchtungssensor des AR-fähigen Geräts erfasste Lichtintensität.

Dabei umfasst das System weiterhin einen Beleuchtungssensor zum Erfassen der Lichtintensität im Fahrzeug, wobei es sich bei der tatsächlichen Lichteinfallintensität des AR-fähigen Geräts um eine Lichtintensität im Fahrzeug, eine durch einen Beleuchtungssensor des AR-fähigen Geräts erfasste Lichtintensität, oder eine Lichtintensität, die auf der Lichtintensität im Fahrzeug und der durch den Beleuchtungssensor des AR-fähigen Geräts erfassten Lichtintensität basierend festgestellt ist, handelt.

Aus dem vorstehenden Inhalt geht hervor, dass mit den Lösungen der Ausführungsformen der vorliegenden Erfindung prognostiziert wird, ob sich die Beleuchtungsumgebung der zu befahrenden Straße in der Fahrrichtung ändern wird, und bei einem positiven Prognoseergebnis die Beleuchtung im Fahrzeug rechtzeitig eingestellt wird, um eine durch ein AR-fähiges Gerät im Fahrzeug angeforderte Hintergrundbeleuchtung zu erzielen. Aufgrund dessen kann es mit den Lösungen der Ausführungsformen der vorliegenden Erfindung ermöglicht werden, dass das AR-fähige Gerät im Fahrzeug einen besseren Anzeigeeffekt bieten kann.

### Kurze Beschreibung der Zeichnung

Mit der folgenden detaillierten Erläuterung im Zusammenhang mit Figuren werden die Eigenschaften, Merkmale, Vorteile und Nutzen der vorliegenden Erfindung offensichtlicher. Es zeigen:
Figur 1 zeigt eine schematische Architektur eines Systems zum Einstellen der Beleuchtung in einer Ausführungsform der vorliegenden Erfindung;
Figur 2 zeigt einen schematischen Ablauf eines Verfahrens zum Einstellen der Beleuchtung in einer Ausführungsform der vorliegenden Erfindung;
Figur 3 zeigt einen schematischen Ablauf eines Verfahrens zum Einstellen der Beleuchtung in einer Ausführungsform der vorliegenden Erfindung;
Figur 4 zeigt einen schematischen Darstellung eines Geräts zum Einstellen der Beleuchtung in einer Ausführungsform der vorliegenden Erfindung;
Figur 5 zeigt eine schematische Darstellung einer Steuervorrichtung in einer Ausführungsform der vorliegenden Erfindung; und
Figur 6 zeigt eine schematische Darstellung eines Systems zum Einstellen der Beleuchtung in einer Ausführungsform der vorliegenden Erfindung.

### Ausführliche Ausführungsformen

Nachfolgend werden die Ausführungsformen der vorliegenden Erfindung im Zusammenhang mit den Figuren näher beschrieben.

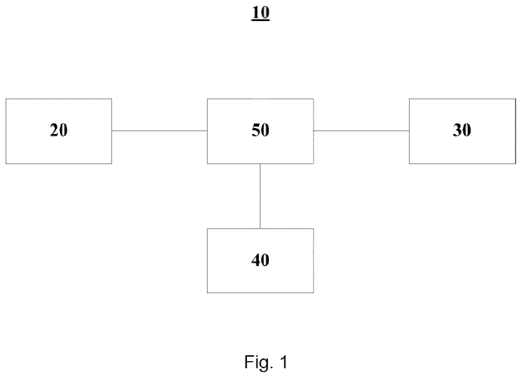

Figur 1 zeigt eine schematische Architektur eines Systems zum Einstellen der Beleuchtung in einer Ausführungsform der vorliegenden Erfindung. Wie in Figur 1 dargestellt, kann ein System 10 zum Einstellen der Beleuchtung ein AR-fähiges Gerät 20, einen Beleuchtungssensor 30, eine Beleuchtungseinstellvorrichtung 40 und eine Steuervorrichtung 50 umfassen, wobei das AR-fähige Gerät 20, der Beleuchtungssensor 30, die Beleuchtungseinstellvorrichtung 40 und die Steuervorrichtung 50 sich in einem Fahrzeug T befinden, und wobei die Steuervorrichtung 50 drahtlos oder verdrahtet mit dem Beleuchtungssensor 30, der Beleuchtungseinstellvorrichtung 40 und dem AR-fähigen Gerät 20 verbunden sein kann.

Auf dem AR-fähigen Gerät 20 laufen verschiedene Anwendungen. Hier können die Anwendungen zum Abspielen eines Videos, Videokonferenzen und dergleichen dienen, allerdings sind sie nicht darauf beschränkt. Üblicherweise verfügen die Anwendungen, welche auf dem AR-fähigen Gerät 20 laufen können, über entsprechende Beleuchtungsparameter, die die durch das AR-fähige Gerät beim Laufen der Anwendungen auf dem AR-fähigen Gerät angeforderte Hintergrundbeleuchtung widerspiegeln. Wenn die durch das AR-fähige Gerät angeforderte Hintergrundbeleuchtung erfüllt wird, wird das AR-fähige Gerät einen besseren Anzeigeeffekt bieten.

Der Beleuchtungssensor 30 wird zum Erfassen der Lichtintensität im Fahrzeug T verwendet. Z.B kann die durch den Beleuchtungssensor 30 erfasste Lichtintensität als tatsächliche Lichteinfallintensität des AR-fähigen Geräts 20 verwendet werden.

Die Beleuchtungseinstellvorrichtung 40 wird zum Einstellen der Lichtintensität im Fahrzeug T verwendet. Die Beleuchtungseinstellvorrichtung 40 kann z.B. einen Scheinwerfer des Fahrzeugs T, eine Innenbeleuchtung, eine Innenfußbeleuchtung und/oder ein Polarisationsfenster umfassen, ist aber nicht darauf beschränkt.

Die Steuervorrichtung 50 kann z.B. ein Bordcomputer eines Fahrzeugs T, ein Fahrzeugnavigationssystem, ein Auto-Multimedia-Player oder eine andere geeignete Vorrichtungen sein, ist aber nicht darauf beschränkt.

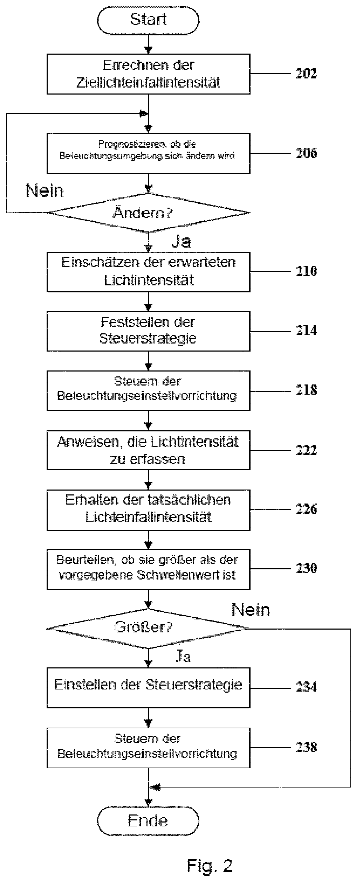

Figur 2 zeigt einen schematischeren Ablauf eines Verfahrens zum Einstellen der Beleuchtung in einer Ausführungsform der vorliegenden Erfindung. Im Zusammenhang mit dem System 10 gemäß Figur 1 wird das Verfahren 200 gemäß Figur 2 im Folgenden näher erläutert.

Wie in Figur 2 dargestellt, kann im Block 202 die Steuervorrichtung 50 anhand der Beleuchtungsparameter einer auf dem AR-fähigen Gerät 20 im Fahrzeug T laufenden oder zu laufenden Anwendung Y die Ziellichteinfallintensität Target des AR-fähigen Geräts 20 errechnen. Dabei spiegeln die Beleuchtungsparameter der Anwendung Y die durch das AR-fähige Gerät beim Laufen der Anwendungen auf dem AR-fähigen Gerät angeforderte Hintergrundbeleuchtung wider. Z.B. können die Beleuchtungsparameter der Anwendung Y durch das AR-fähige Gerät 20 an die Steuervorrichtung 50 übertragen werden. Bei der Anwendung Y kann es sich darum handeln, dass ein Benutzer im Fahrzeug T (z.B. der Fahrer oder Beifahrer des Fahrzeugs T usw.) aus mehreren Anwendungen eine auf dem AR-fähigen Gerät 20 zu laufende Anwendung auswählt. Wenn die tatsächliche Lichteinfallintensität des AR-fähigen Geräts 20 die Ziellichteinfallintensität Target erreicht, wird die durch das AR-fähige Gerät 20 beim Laufen der Anwendung Y auf dem AR-fähigen Gerät 20 angeforderte Hintergrundbeleuchtung erfüllt.

Im Block 206 kann die Steuervorrichtung 50 prognostizieren, ob sich die Beleuchtungsumgebung einer zu befahrenden Straße HR in der Fahrrichtung des Fahrzeug T ändern wird. Z.B. kann die Steuervorrichtung 50 anhand der Navigationsdaten der Fahrtroute und der Online-Wetterinformationen und anderer verfügbaren Daten prognostizieren, ob sich die Beleuchtungsumgebung der zu befahrenden Straße HR ändern wird. Z.B. kann die Steuervorrichtung 50 prognostizieren, dass die Beleuchtungsumgebung der zu befahrenden Straße HR dunkel wird, wenn anhand der Navigationsdaten der Fahrtroute festgestellt wird, dass das Fahrzeug T in einen Tunnel eintreten wird. Z.B. kann die Steuervorrichtung 50 prognostizieren, dass die Beleuchtungsumgebung der zu befahrenden Straße HR dunkel wird, wenn anhand der Online-Wetterinformationen festgestellt wird, dass das Fahrzeug T in eine Gewitterzone eintreten wird.

Bei einem negativen Prognoseergebnis des Blocks 206, nämlich bei einer sich nicht ändernden Beleuchtungsumgebung der zu befahrenden Straße HR, geht das Verfahren 200 zurück zum Block 206.

Bei einem positiven Prognoseergebnis des Blocks 206, nämlich wenn die Beleuchtungsumgebung der zu befahrenden Straße sich ändern wird, kann im Block 210 die Steuervorrichtung 50 die erwartete Lichtintensität Exp der Beleuchtungsumgebung der zu befahrenden Straße HR einschätzen.

Im Block 214 kann die Steuervorrichtung 50 anhand der Ziellichteinfallintensität Target des AR-fähigen Geräts 20 und der erwarteten Lichtintensität Exp der zu befahrenden Straße HR die Steuerstrategie für die Beleuchtungseinstellvorrichtung 40 feststellen. Wenn anhand der festgestellten Steuerstrategie die Beleuchtungseinstellvorrichtung 40 gesteuert wird und die tatsächliche Lichtintensität der Beleuchtungsumgebung der zu befahrenden Straße HR der erwarteten Lichtintensität Exp entspricht, wird die Beleuchtung im Fahrzeug T auf eine angemessene Lichtintensität eingestellt, so dass die tatsächliche Lichteinfallintensität des AR-fähigen Geräts 20 im Fahrzeug T annähernd oder gleich der Ziellichteinfallintensität Target ist.

Wenn z.B. angenommen wird, dass die Beleuchtungseinstellvorrichtung 40 einen Scheinwerfer des Fahrzeugs T, eine Innenbeleuchtung, eine Innenfußbeleuchtung und ein Polarisationsfenster umfasst, kann ein Beispiel der Steuerstrategie für die Beleuchtungseinstellvorrichtung 40 wie folgt sein: der Scheinwerfer des Fahrzeugs T und die Innenbeleuchtung werden ausgeschaltet, die Innenfußbeleuchtung des Fahrzeugs wird angeschaltet, und der Polarisationswinkel des Polarisationsfensters des Fahrzeugs T wird auf einen vorgegebenen Winkelwert eingestellt.

Während oder bevor das Fahrzeug T in die zu befahrenden Straße HR einfährt, kann die Steuervorrichtung 50 im Block 218 nach der festgestellten Steuerstrategie im Block 214 die Beleuchtungseinstellvorrichtung 40 steuern und die Beleuchtung im Fahrzeug T rechtzeitig einstellen.

Nach Einstellen der Beleuchtung des Fahrzeugs T anhand der durch den Block 214 festgestellten Steuerstrategie kann im Block 222 die Steuervorrichtung 50 den Beleuchtungssensor 30 anweisen, die Lichtintensität im Fahrzeug T zu erfassen.

Im Block 226 kann die Steuervorrichtung 50 von dem Beleuchtungssensor 30 die durch ihn erfasste Lichtintensität des Fahrzeugs T erzielen und sie als die tatsächliche Lichteinfallintensität des AR-fähigen Geräts 20 verwenden.

Im Block 230 beurteilt die Steuervorrichtung 50, ob der Differenzwert D zwischen der erzielten tatsächlichen Lichteinfallintensität des AR-fähigen Geräts 20 und der Ziellichteinfallintensität Target des AR-fähigen Geräts 20 größer als der vorgegebene Schwellenwert m ist. Hier kann der vorgegebene Schwellenwert m nach tatsächlichen Bedürfnissen eingestellt werden. Z.B. kann der vorgegebene Schwellenwert m Null sein.

Bei einem negativen Beurteilungsergebnis des Blocks 230 endet das Verfahren 200.

Bei einem positiven Beurteilungsergebnis des Blocks 230 kann die Steuervorrichtung 50 im Block 234 nach dem Differenzwert D die Steuerstrategie für die Beleuchtungseinstellvorrichtung 40 einstellen. Wenn z.B. der Differenzwert D zeigt, dass die tatsächliche Lichteinfallintensität des AR-fähigen Geräts 20 niedriger als die Ziellichteinfallintensität Target des AR-fähigen Geräts 20 ist, kann die Steuerstrategie auf eine Steuerstrategie zum Erhöhen der Lichtintensität des Fahrzeugs T eingestellt werden. Wenn z.B. der Differenzwert D zeigt, dass die tatsächliche Lichteinfallintensität des AR-fähigen Geräts 20 höher als die Ziellichteinfallintensität Target des AR-fähigen Geräts 20 ist, kann die Steuerstrategie auf eine Steuerstrategie zum Reduzieren der Lichtintensität des Fahrzeugs T eingestellt werden.

Im Block 238 kann die Steuervorrichtung 50 anhand der eingestellten Steuerstrategie die Beleuchtungseinstellvorrichtung 40 steuern, um die Beleuchtung des Fahrzeugs T weiterhin einzustellen.

Die Blöcke 222-238 können einmal oder mehrmals ausgeführt werden, bis der Differenzwert D zwischen der tatsächlichen Lichteinfallintensität des AR-fähigen Geräts 20 und der Ziellichteinfallintensität Target des AR-fähigen Geräts 20 nicht höher als der vorgegebene Schwellenwert m ist.

Aus dem vorstehenden Inhalt geht hervor, dass mit den Lösungen der Ausführungsformen der vorliegenden Erfindung prognostiziert wird, ob die Beleuchtungsumgebung der zu befahrenden Straße sich ändern wird, und bei einem positiven Prognoseergebnis die Beleuchtung im Fahrzeug rechtzeitig eingestellt wird, um eine durch ein AR-fähiges Gerät im Fahrzeug angeforderte Hintergrundbeleuchtung zu erzielen. Aufgrund dessen wird mit den Lösungen der Ausführungsformen der vorliegenden Erfindung ermöglicht, dass das AR-fähige Gerät im Fahrzeug einen guten Anzeigeeffekt bieten kann.

### Andere Varianten

Der Fachmann auf diesem Gebiet sollte verstehen, dass in den obigen Ausführungsformen der vorliegenden Erfindung die durch den Beleuchtungssensor 30 erfasste Lichtintensität des Fahrzeugs T als die tatsächliche Lichteinfallintensität des AR-fähigen Geräts 20 verwendet wird, allerdings die vorliegende Erfindung nicht darauf beschränkt ist. In einigen Ausführungsformen der vorliegenden Erfindung kann die durch einen eigenen Beleuchtungssensor des AR-fähigen Geräts 20 erfasste Lichtintensität als die tatsächliche Lichteinfallintensität des AR-fähigen Geräts 20 verwendet werden, und in diesem Falle kann das System 10 keinen Beleuchtungssensor 30 umfassen. Alternativ wird in einigen weiteren Ausführungsformen der vorliegenden Erfindung eine durch zusammenfassende Berücksichtigung der durch den Beleuchtungssensor 30 erfassten Lichtintensität des Fahrzeugs T und der durch den eigenen Beleuchtungssensor des AR-fähigen Geräts 20 erfassten Lichtintensität erzielte Lichtintensität als die tatsächliche Lichteinfallintensität des AR-fähigen Geräts 20 verwendet.

Der Fachmann auf diesem Gebiet sollte verstehen, dass in den obigen Ausführungsformen der vorliegenden Erfindung das Verfahren 200 die Blöcke 222-238 zum Einstellen der Steuerstrategie der Beleuchtungseinstellvorrichtung 40 umfasst, so dass die tatsächliche Lichteinfallintensität des AR-fähigen Geräts 20 im Wesentlichen gleich wie die Ziellichteinfallintensität Target des AR-fähigen Geräts 20 ist, allerdings die vorliegende Erfindung nicht darauf beschränkt ist. In einigen Ausführungsformen der vorliegenden Erfindung kann das Verfahren 200 keine Blöcke 222-238 umfassen.

Der Fachmann auf diesem Gebiet sollte verstehen, wenn in einigen Ausführungsformen der vorliegenden Erfindung die tatsächliche Lichteinfallintensität des AR-fähigen Geräts 20 nach allen möglichen Einstellungen der Steuerstrategie der Beleuchtungseinstellvorrichtung 40 die Ziellichteinfallintensität Target des AR-fähigen Geräts 20 ist, kann die Steuervorrichtung 50 die tatsächliche Lichteinfallintensität des AR-fähigen Geräts 20 als die optimale Lichteinfallintensität des AR-fähigen Geräts 20 ans AR-fähige Gerät 20 übertragen, dann stellt das AR-fähige Gerät 20 anhand des Differenzwerts zwischen der optimalen Lichteinfallintensität des AR-fähigen Geräts 20 und der Ziellichteinfallintensität Target den Polarisationswinkel einer Linse des AR-fähigen Geräts 20 und/oder die Leuchtdichte des Projektionsabbildes des AR-fähigen Geräts 20 ein, so dass die tatsächliche Lichteinfallintensität des AR-fähigen Geräts 20 im Wesentlichen gleich der Ziellichteinfallintensität Target des AR-fähigen Geräts 20 ist.

Der Fachmann auf diesem Gebiet sollte verstehen, dass in den obigen Ausführungsformen der vorliegenden Erfindung das AR-fähige Gerät 20 im System 10 enthalten wird, allerdings die vorliegende Erfindung nicht darauf beschränkt ist. In einigen Ausführungsformen der vorliegenden Erfindung kann das AR-fähige Gerät 20 ebenfalls nicht im System 10 enthalten werden.

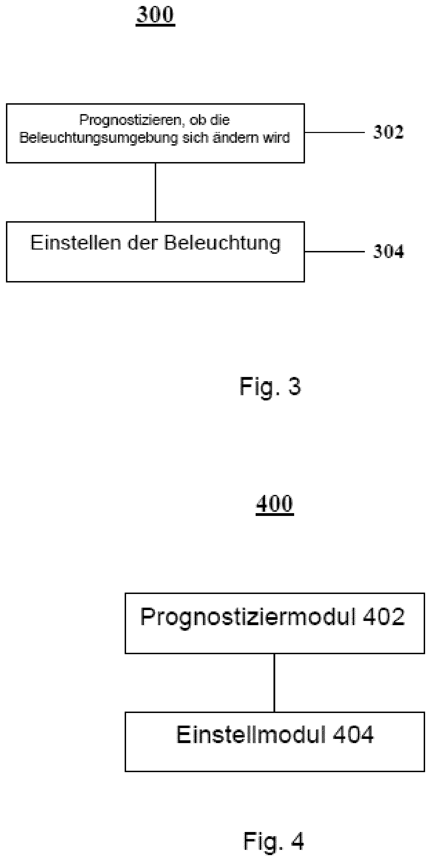

Figur 3 zeigt einen schematischen Ablauf eines Verfahrens zum Einstellen der Beleuchtung in einer Ausführungsform der vorliegenden Erfindung. Das Verfahren 300 gemäß Figur 3 kann z.B. durch eine Steuervorrichtung 50 realisiert werden.

Wie in Figur 3 dargestellt, kann das Verfahren 300 den folgenden Schritt umfassen: Prognostizieren im Block 302, ob sich die Beleuchtungsumgebung einer zu befahrenden Straße in der Fahrrichtung eines Fahrzeug ändern wird.

Das Verfahren 300 kann weiterhin den folgenden Schritt umfassen: rechtzeitiges Einstellen der Beleuchtung im Fahrzeug im Block 304 bei einem positiven Prognoseergebnis des Blocks 302 mittels einer Beleuchtungseinstellvorrichtung des Fahrzeugs, um eine durch ein AR-fähiges Gerät im Fahrzeug angeforderte Hintergrundbeleuchtung zu erzielen.

Bei einem anderen Aspekt kann der Block 304 die folgenden Schritte umfassen: Feststellen einer Steuerstrategie für die Beleuchtungseinstellvorrichtung des Fahrzeugs anhand einer Ziellichteinfallintensität des AR-fähigen Geräts und einer erwarteten Lichtintensität der Beleuchtungsumgebung der zu befahrenden Straße; und Steuern der Beleuchtungseinstellvorrichtung nach der festgestellten Steuerstrategie zum Einstellen der Beleuchtung im Fahrzeug, während oder bevor das Fahrzeug in die zu befahrenden Straße einfährt; wobei die Ziellichteinfallintensität aufgrund der Beleuchtungsparameter einer laufenden Anwendung auf dem AR-fähigen Gerät errechnet wird.

Bei einem anderen Aspekt kann das Verfahren 300 weiterhin die folgenden Schritte umfassen: Einstellen der Steuerstrategie aufgrund eines Differenzwerts zwischen der tatsächlichen Lichteinfallintensität des AR-fähigen Geräts nach dem Einstellen und der Ziellichteinfallintensität, wenn der Differenzwert größer als ein vorgegebener Schwellenwert ist; und Steuern der Beleuchtungseinstellvorrichtung nach der eingestellten Steuerstrategie zum Einstellen der Beleuchtung im Fahrzeug.

Bei einem weiteren Aspekt kann das Verfahren 300 weiterhin den folgenden Schritt umfassen: Übertragen der tatsächlichen Lichteinfallintensität des AR-fähigen Geräts als eine optimale Lichteinfallintensität für das AR-fähige Gerät an das AR-fähige Gerät, wenn nach dem Einstellen die tatsächliche Lichteinfallintensität des AR-fähigen Geräts die Ziellichteinfallintensität nicht erreichen kann, so dass das AR-fähige Gerät aufgrund der optimalen Lichteinfallintensität und der Ziellichteinfallintensität den Polarisationswinkel einer Linse des AR-fähigen Geräts und/oder die Leuchtdichte des Projektionsabbildes des AR-fähigen Geräts einstellt.

Bei einem weiteren Aspekt kann es sich bei der tatsächlichen Lichteinfallintensität des AR-fähigen Geräts um eine Lichtintensität im Fahrzeug, eine durch einen Beleuchtungssensor des AR-fähigen Geräts erfasste Lichtintensität, oder eine Lichtintensität, die auf der Lichtintensität im Fahrzeug und der durch den Beleuchtungssensor des AR-fähigen Geräts erfassten Lichtintensität basierend festgestellt ist, handeln.

Bei einem Aspekt kann der Block 302 den folgenden Schritt umfassen: Prognostizieren, dass die Beleuchtungsumgebung der zu befahrenden Straße dunkel wird, wenn anhand der Navigationsdaten der Fahrtroute festgestellt wird, dass das Fahrzeug in einen Tunnel eintreten wird oder wenn anhand der Online-Wetterinformationen festgestellt wird, dass das Fahrzeug in eine Gewitterzone eintreten wird.

Figur 4 zeigt eine schematische Darstellung eines Geräts zum Einstellen der Beleuchtung in einer Ausführungsform der vorliegenden Erfindung. Das Gerät 400 gemäß Figur 4 kann durch Software, Hardware oder eine Kombination von Software und Hardware realisiert werden und kann z.B. in der Steuervorrichtung 50 installiert werden.

Wie in Figur 4 dargestellt, kann das Gerät 400 ein Prognostiziermodul 402 und ein Einstellmodul 404 umfassen. Das Prognostiziermodul 402 kann prognostizieren, ob sich die Beleuchtungsumgebung einer zu befahrenden Straße in der Fahrrichtung eines Fahrzeugs ändern wird. Das Einstellmodul 404 kann bei einem positiven Prognoseergebnis mittels einer Beleuchtungseinstellvorrichtung des Fahrzeugs die Beleuchtung im Fahrzeug rechtzeitig einstellen, um eine durch ein AR-fähiges Gerät im Fahrzeug angeforderte Hintergrundbeleuchtung zu erzielen. Bei einem Aspekt kann das Einstellmodul 404 umfassen: ein Feststellmodul zum Feststellen einer Steuerstrategie für die Beleuchtungseinstellvorrichtung des Fahrzeugs anhand einer Ziellichteinfallintensität des AR-fähigen Geräts und einer erwarteten Lichtintensität der Beleuchtungsumgebung der zu befahrenden Straße; und ein Steuermodul zum Steuern der Beleuchtungseinstellvorrichtung nach der festgestellten Steuerstrategie, um während oder bevor das Fahrzeug in die zu befahrende Straße einfährt, die Beleuchtung im Fahrzeug einzustellen; wobei die Ziellichteinfallintensität aufgrund der Beleuchtungsparameter einer laufenden Anwendung auf dem AR-fähigen Gerät errechnet wird.

Bei einem anderen Aspekt kann das Gerät 400 weiterhin ein Einstellmodul umfassen, welches die Steuerstrategie aufgrund eines Differenzwerts zwischen der tatsächlichen Lichteinfallintensität des AR-fähigen Geräts nach dem Einstellen und der Ziellichteinfallintensität einstellt, wenn der Differenzwert größer als ein vorgegebener Schwellenwert ist; wobei das Steuermodul weiterhin dazu verwendet wird, die Beleuchtungseinstellvorrichtung nach der eingestellten Steuerstrategie zu steuern, um die Beleuchtung im Fahrzeug einzustellen.

Bei einem weiteren Aspekt kann das Gerät 400 weiterhin ein Übertragungsmodul umfassen, welches zum Übertragen der tatsächlichen Lichteinfallintensität des AR-fähigen Geräts als eine optimale Lichteinfallintensität für das AR-fähige Gerät an das AR-fähige Gerät verwendet wird, wenn nach dem Einstellen die tatsächliche Lichteinfallintensität des AR-fähigen Geräts die Ziellichteinfallintensität nicht erreichen kann, so dass das AR-fähige Gerät aufgrund der optimalen Lichteinfallintensität und der Ziellichteinfallintensität den Polarisationswinkel einer Linse des AR-fähigen Geräts und/oder die Leuchtdichte des Projektionsabbildes des AR-fähigen Geräts einstellt.

Bei einem weiteren Aspekt kann es sich bei der tatsächlichen Lichteinfallintensität des AR-fähigen Geräts um eine Lichtintensität im Fahrzeug, eine durch einen Beleuchtungssensor des AR-fähigen Geräts erfasste Lichtintensität, oder eine Lichtintensität, die auf der Lichtintensität im Fahrzeug und der durch den Beleuchtungssensor des AR-fähigen Geräts erfassten Lichtintensität basierend festgestellt ist, handeln.

Bei einem weiteren Aspekt kann das Prognostiziermodul 402 weiterhin zum Prognostizieren verwendet werden, dass die Beleuchtungsumgebung der zu befahrenden Straße dunkel wird, wenn anhand der Navigationsdaten der Fahrtroute festgestellt wird, dass das Fahrzeug in einen Tunnel eintreten wird oder wenn anhand der Online-Wetterinformationen festgestellt wird, dass das Fahrzeug in eine Gewitterzone eintreten wird.

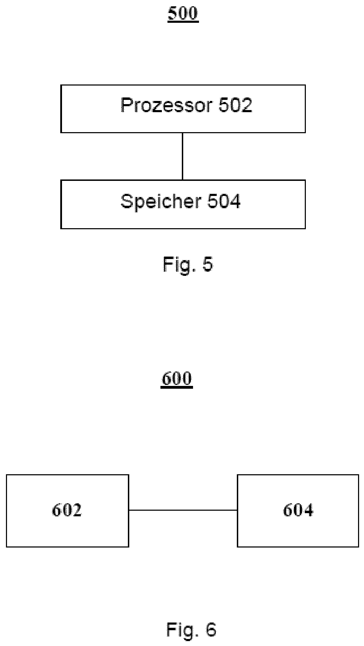

Figur 5 zeigt eine schematische Darstellung einer Steuervorrichtung in einer Ausführungsform der vorliegenden Erfindung. Die Steuervorrichtung 500 gemäß Figur 5 kann z.B. eine Steuervorrichtung 50 sein.

Wie in Figur 5 dargestellt, kann die Steuervorrichtung 500 einen Prozessor 502 und einen Speicher 504 umfassen, wobei der Speicher 504 zum Speichern ausführbarer Anweisungen verwendet wird, und wobei beim Ausführen der ausführbaren Anweisungen ermöglicht wird, dass der Prozessor 502 das Verfahren 300 gemäß Figur 3 ausführt.

Eine Ausführungsform der vorliegenden Erfindung stellt weiter ein maschinenlesbares Medium zur Verfügung, auf dem ausführbare Anweisungen gespeichert sind, wobei beim Ausführen der ausführbaren Anweisungen ermöglicht wird, dass die Maschine das Verfahren 300 gemäß Figur 3 ausführt.

Figur 6 zeigt eine schematische Darstellung eines Systems zum Einstellen der Beleuchtung in einer Ausführungsform der vorliegenden Erfindung. Wie in Figur 6 dargestellt, kann das System 600 eine Beleuchtungseinstellvorrichtung 602 für das Fahrzeug und eine Steuervorrichtung 604 umfassen, wobei die Steuervorrichtung 604 zum Ausführen von dem Verfahren 300 gemäß Figur 3 verwendet werden kann.

Bei einem Aspekt kann das System 600 weiterhin das AR-fähige Gerät umfassen.

Bei einem anderen Aspekt kann das AR-fähige Gerät weiterhin dazu verwendet werden, aufgrund der optimalen Lichteinfallintensität und der Ziellichteinfallintensität den Polarisationswinkel einer Linse des AR-fähigen Geräts und/oder die Leuchtdichte des Projektionsabbildes des AR-fähigen Geräts einzustellen, wenn von der Steuervorrichtung 604 die optimale Lichteinfallintensität des AR-fähigen Geräts empfangen wird.

Bei einem weiteren Aspekt kann das System 600 weiterhin einen Beleuchtungssensor zum Erfassen der Lichtintensität im Fahrzeug umfassen, und wobei es sich bei der tatsächlichen Lichteinfallintensität des AR-fähigen Geräts um eine Lichtintensität im Fahrzeug, eine durch einen Beleuchtungssensor des AR-fähigen Geräts erfasste Lichtintensität, oder eine Lichtintensität, die auf der Lichtintensität im Fahrzeug und der durch den Beleuchtungssensor des AR-fähigen Geräts erfassten Lichtintensität basierend festgestellt ist, handelt.

Der Fachmann auf diesem Gebiet sollte verstehen, dass verschiedene Modifikationen und Varianten für die offenbarten Ausführungsformen ohne Abweichung vom Geist der vorliegenden Erfindung durchgeführt werden können. Die Modifikationen und Varianten sollen als vom Schutzumfang der vorliegenden Erfindung abgedeckt angesehen werden. Darüber hinaus soll der Schutzumfang der vorliegenden Erfindung durch die Ansprüche definiert werden.

## Patentansprüche

1. Verfahren zum Einstellen der Beleuchtung, umfassend die folgenden Schritte:
Prognostizieren, ob die Beleuchtungsumgebung einer zu befahrenden Straße in der Fahrrichtung eines Fahrzeugs sich ändern wird; und
rechtzeitiges Einstellen der Beleuchtung im Fahrzeug bei einem positiven Prognoseergebnis mittels einer Beleuchtungseinstellvorrichtung des Fahrzeugs, um eine durch ein AR-fähiges Gerät im Fahrzeug angeforderte Hintergrundbeleuchtung zu erzielen.

2. Verfahren nach Anspruch 1, wobei die Einstellung der Beleuchtung im Fahrzeug die folgenden Schritte umfasst:
Feststellen einer Steuerstrategie für die Beleuchtungseinstellvorrichtung des Fahrzeugs anhand einer Ziellichteinfallintensität des AR-fähigen Geräts und einer erwarteten Lichtintensität der Beleuchtungsumgebung der zu befahrenden Straße; und
Steuern der Beleuchtungseinstellvorrichtung nach der festgestellten Steuerstrategie zum Einstellen der Beleuchtung im Fahrzeug, während oder bevor das Fahrzeug in die zu befahrenden Straße einfährt,
wobei die Ziellichteinfallintensität aufgrund der Beleuchtungsparameter einer laufenden Anwendung auf dem AR-fähigen Gerät errechnet wird.

3. Verfahren nach Anspruch 2, wobei das Verfahren weiterhin die folgenden Schritte umfasst:
Einstellen der Steuerstrategie aufgrund eines Differenzwerts zwischen der tatsächlichen Lichteinfallintensität des AR-fähigen Geräts nach dem Einstellen und der Ziellichteinfallintensität, wenn der Differenzwert größer als ein vorgegebener Schwellenwert ist; und
Steuern der Beleuchtungseinstellvorrichtung nach der eingestellten Steuerstrategie zum Einstellen der Beleuchtung im Fahrzeug.

4. Verfahren nach Anspruch 3, wobei das Verfahren weiterhin den folgenden Schritt umfasst:
Übertragen der tatsächlichen Lichteinfallintensität des AR-fähigen Geräts als eine optimale Lichteinfallintensität für das AR-fähige Gerät an das AR-fähige Gerät, wenn nach dem Einstellen die tatsächliche Lichteinfallintensität des AR-fähigen Geräts die Ziellichteinfallintensität nicht erreichen kann, so dass das AR-fähige Gerät aufgrund der optimalen Lichteinfallintensität und der Ziellichteinfallintensität den Polarisationswinkel einer Linse des AR-fähigen Geräts und/oder die Leuchtdichte des Projektionsabbildes des AR-fähigen Geräts einstellt.

5. Verfahren nach Anspruch 3, wobei
es sich bei der tatsächlichen Lichteinfallintensität des AR-fähigen Geräts um eine Lichtintensität im Fahrzeug, eine durch einen Beleuchtungssensor des AR-fähigen Geräts erfasste Lichtintensität, oder eine Lichtintensität, die aufgrund der Lichtintensität im Fahrzeug und der durch den Beleuchtungssensor des AR-fähigen Geräts erfassten Lichtintensität festgestellt ist, handelt.

6. Verfahren nach Anspruch 1, wobei der Schritt des Prognostizierens, ob sich die Beleuchtungsumgebung einer zu befahrenden Straße in der Fahrrichtung eines Fahrzeugs ändern wird, den folgenden Schritt umfasst:
Prognostizieren, dass die Beleuchtungsumgebung der zu befahrenden Straße dunkel wird, wenn anhand der Navigationsdaten der Fahrtroute festgestellt wird, dass das Fahrzeug in einen Tunnel eintreten wird oder wenn anhand der Online-Wetterinformationen festgestellt wird, dass das Fahrzeug in eine Gewitterzone eintreten wird.

7. Gerät zum Einstellen der Beleuchtung, umfassend:
ein Prognostiziermodul zum Prognostizieren, ob sich die Beleuchtungsumgebung einer zu befahrenden Straße in der Fahrrichtung eines Fahrzeugs ändern wird; und
ein Einstellmodul zum rechtzeitigen Einstellen der Beleuchtung im Fahrzeug bei einem positiven Prognoseergebnis mittels einer Beleuchtungseinstellvorrichtung des Fahrzeugs, um eine durch ein AR-fähiges Gerät im Fahrzeug angeforderte Hintergrundbeleuchtung zu erzielen.

8. Gerät nach Anspruch 7, wobei das Einstellmodul umfasst:
ein Feststellmodul zum Feststellen einer Steuerstrategie für die Beleuchtungseinstellvorrichtung des Fahrzeugs anhand einer Ziellichteinfallintensität des AR-fähigen Geräts und einer erwarteten Lichtintensität der Beleuchtungsumgebung der zu befahrenden Straße; und
ein Steuermodul zum Steuern der Beleuchtungseinstellvorrichtung nach der festgestellten Steuerstrategie, um während oder bevor das Fahrzeug in die zu befahrende Straße einfährt, die Beleuchtung im Fahrzeug einzustellen,
wobei die Ziellichteinfallintensität aufgrund der Beleuchtungsparameter einer laufenden Anwendung auf dem AR-fähigen Gerät errechnet wird.

9. Gerät nach Anspruch 8, das weiterhin umfasst:
ein Einstellmodul zum Einstellen der Steuerstrategie aufgrund eines Differenzwerts zwischen der tatsächlichen Lichteinfallintensität des AR-fähigen Geräts nach dem Einstellen und der Ziellichteinfallintensität, wenn der Differenzwert größer als ein vorgegebener Schwellenwert ist,
und wobei das Steuermodul weiterhin dazu verwendet wird, die Beleuchtungseinstellvorrichtung nach der eingestellten Steuerstrategie zu steuern, um die Beleuchtung im Fahrzeug einzustellen.

10. Gerät nach Anspruch 9, das weiterhin umfasst:
ein Übertragungsmodul zum Übertragen der tatsächlichen Lichteinfallintensität des AR-fähigen Geräts als eine optimale Lichteinfallintensität des AR-fähigen Geräts an das AR-fähige Gerät, wenn nach dem Einstellen die tatsächliche Lichteinfallintensität des AR-fähigen Geräts die Ziellichteinfallintensität nicht erreichen kann, so dass das AR-fähige Gerät aufgrund der optimalen Lichteinfallintensität und der Ziellichteinfallintensität den Polarisationswinkel einer Linse des AR-fähigen Geräts und/oder die Leuchtdichte des Projektionsabbildes des AR-fähigen Geräts einstellt.

11. Gerät nach Anspruch 9, wobei
es sich bei der tatsächlichen Lichteinfallintensität des AR-fähigen Geräts um eine Lichtintensität im Fahrzeug, eine durch einen Beleuchtungssensor des AR-fähigen Geräts erfasste Lichtintensität, oder eine Lichtintensität, die aufgrund der Lichtintensität im Fahrzeug und der durch den Beleuchtungssensor des AR-fähigen Geräts erfassten Lichtintensität festgestellt ist, handelt.

12. Gerät nach Anspruch 7, wobei
das Prognostiziermodul weiterhin zum Prognostizieren verwendet wird, dass die Beleuchtungsumgebung der zu befahrenden Straße dunkel wird, wenn anhand der Navigationsdaten der Fahrtroute festgestellt wird, dass das Fahrzeug in einen Tunnel eintreten wird oder wenn anhand der Online-Wetterinformationen festgestellt wird, dass das Fahrzeug in eine Gewitterzone eintreten wird.

13. Vorrichtung zum Einstellen der Beleuchtung, umfassend:
einen Prozessor; und
einen Speicher zum Speichern ausführbarer Anweisungen, wobei beim Ausführen der ausführbaren Anweisungen ermöglicht wird, dass der Prozessor ein Verfahren nach einem der Ansprüche 1 bis 6 ausführt.

14. Maschinenlesbares Medium, auf dem ausführbare Anweisungen gespeichert sind, wobei beim Ausführen der ausführbaren Anweisungen ermöglicht wird, dass die Maschine ein Verfahren nach einem der Ansprüche 1 bis 5 ausführt.

15. System zum Einstellen der Beleuchtung, umfassend:
eine Beleuchtungseinstellvorrichtung für ein Fahrzeug; und
eine Steuervorrichtung zum Ausführen von einem Verfahren nach einem der Ansprüche 1 bis 6.

16. System nach Anspruch 15, wobei das System weiterhin umfasst:
ein AR-fähiges Gerät.

17. System nach Anspruch 16, wobei
das AR-fähige Gerät weiterhin dazu verwendet wird, aufgrund der optimalen Lichteinfallintensität und der Ziellichteinfallintensität den Polarisationswinkel einer Linse des AR-fähigen Geräts und/oder die Leuchtdichte des Projektionsabbildes des AR-fähigen Geräts einzustellen, wenn von der Steuervorrichtung die optimale Lichteinfallintensität des AR-fähigen Geräts empfangen wird.

18. System nach Anspruch 15, 16 oder 17, wobei das System weiterhin umfasst:
einen Beleuchtungssensor zum Erfassen der Lichtintensität im Fahrzeug,
und wobei es sich bei der tatsächlichen Lichteinfallintensität des AR-fähigen Geräts um eine Lichtintensität im Fahrzeug, eine durch einen Beleuchtungssensor des AR-fähigen Geräts erfasste Lichtintensität, oder eine Lichtintensität, die aufgrund der Lichtintensität im Fahrzeug und der durch den Beleuchtungssensor des AR-fähigen Geräts erfassten Lichtintensität festgestellt ist, handelt.
